# EUROPÄISCHE PATENTANMELDUNG

(11) **EP 3 321 651 A1**
(43) Veröffentlichungstag der Anmeldung: **16.05.2018**
(21) Anmeldenummer: 17195090.0
(22) Anmeldetag: 06.10.2017
(51) Int. Cl.: G01K 1/02, G01K 5/68

(54) **TEMPERATURSENSORENANORDNUNG UND VERFAHREN ZUR ÜBERWACHUNG EINER UMGEBUNGSTEMPERATUR**

(30) Priorität: 02.11.2016 DE 102016120873
(71) Anmelder: Müller, Manfred K., 75179 Pforzheim (DE)
(72) Erfinder: Müller, Manfred K., 75179 Pforzheim (DE)
(74) Vertreter: Lemcke, Brommer & Partner Patentanwälte Partnerschaft mbB

(57) **Zusammenfassung**

Um eine Temperatursensoranordnung, insbesondere als Brandmelder im Motorraum eines Kraftfahrzeuges, mit einem bistabilen, vorzugsweise scheibenförmigen Bimetallelement, welches aufgrund seines Wärmeausdehnungsverhaltens bei Überschreiten einer vorgegebenen Grenztemperatur eine abrupte Formänderung erfährt, und mit einer mit dem Bimetallelement zusammenwirkenden Detektorschaltung, in Hinblick auf ein schnelleres Ansprechverhalten zu verbessern, ist erfindungsgemäß ein Mikrofon vorgesehen und die Detektorschaltung ist dazu ausgebildet, ein durch das Bimetallelement aufgrund seiner abrupten Formänderung erzeugtes, über das Mikrofon aufgenommenes, charakteristisches Umschlaggeräusch zu detektieren.

## Beschreibung

Die vorliegende Erfindung betrifft eine Temperatursensoranordnung, insbesondere als Brandmelder im Motorraum eines Kraftfahrzeuges, mit einem bistabilen, vorzugsweise scheibenförmigen Bimetallelement, welches aufgrund seines Wärmeausdehnungsverhaltens bei Überschreiten einer vorgegebenen Grenztemperatur eine abrupte Formänderung erfährt, und mit einer mit dem Bimetallelement zusammenwirkenden Detektorschaltung.

Temperatursensoren beruhen häufig auf der temperaturabhängigen Verformung von Bimetallen. Ein Bimetallelement umfasst zwei Schichten aus Metallen mit unterschiedlicher Temperaturausdehnung, wie etwa Zink und Stahl oder Stahl und Messing, die miteinander stoffschlüssig oder formschlüssig verbunden sind. Aufgrund der unterschiedlichen Wärmeausdehnungskoeffizienten der verwendeten Metalle erfährt ein Bimetallelement bei Temperaturänderung eine Veränderung der Form, meist eine Verbiegung.

In einem Temperaturschalter öffnet bzw. schließt z.B. ein Bimetallstreifen in Abhängigkeit von der Temperatur einen elektrischen Kontakt. Statt eines länglichen Streifens kann als Bimetallelement auch eine leicht gewölbte Kreisscheibe aus dünnem Bimetallblech verwendet werden. Bei Erwärmen dehnt sich das Material der Schaleninnenseite aus und tendiert daher dazu die Wölbung umzustülpen. Dieses Bauelement ist damit in sich bistabil. Es schaltet plötzlich und kraftvoll um und erst bei starker Abkühlung wieder zurück, weist somit hohe Hysterese und Zuverlässigkeit auf.

Eine Sensoranordnung der eingangs genannten Art ist beispielsweise aus der DE2121802B2 bekannt. Dort wird ein Temperaturwächter mit einer bistabilen Schnappscheibe beschrieben, die bei Überschreiten einer Umschnapptemperatur einen elektrischen Kontakt öffnet.

Daneben sind im Stand der Technik auch Sensoranordnungen bekannt, bei denen mechanisch ein Signal erzeugt wird. So ist aus der JP 05 034396 A eine Vorrichtung zur Erkennung einer Übertemperatur bekannt, bei der durch eine temperaturabhängige Formänderung eines Bimetallelements ein Hammer gelöst wird, welcher durch Anschlagen einer Glocke ein akustisches Signal auslöst. Eine ähnliche Vorrichtung wird in der JP 04 091618 A beschrieben, bei der durch ein Bimetallelement z. B: eine Spieluhr aktiviert wird.

Bekannten Temperatursensoranordnungen mit Bimetallelement ist somit gemein, dass durch die Verformung des Bimatellelements mechanisch eine Aktion ausgelöst wird. Das Bimetallelement steht also notwendig in mechanischem Kontakt zu anderen Bauteilen oder ist von solchen umgeben. Dies führt dazu, dass die Sensoranordnung als Ganzes eine vergleichsweise große thermische Masse ausweist, die zunächst auf Schalttemperatur erwärmt werden muss, bevor die Sensoranordnung bei Überschreiten der Umschalttemperatur auslöst. Solche Sensoranordnungen sind somit relativ träge.

Aufgabe der vorliegenden Erfindung ist es, eine verbesserte Temperatursensoranordnung anzugeben, insbesondere eine Temperatursensoranordnung der eingangs genannten Art in Hinblick auf ein schnelleres Ansprechverhalten zu verbessern.

Diese Aufgabe wird gelöst durch eine Temperatursensoranordnung gemäß Anspruch 1. Vorteilhafte Ausgestaltungen sind den abhängigen Ansprüchen zu entnehmen. Daneben wird ein Verfahren zur Überwachung einer Umgebungstemperatur angegeben.

Bei einer Temperatursensoranordnung der eingangs genannten Art ist erfindungsgemäß ein Mikrofon vorgesehen und die Detektorschaltung ist dazu ausgebildet, ein durch das Bimetallelement aufgrund seiner abrupten Formänderung erzeugtes, über das Mikrofon aufgenommenes, charakteristisches Umschlaggeräusch zu detektieren.

Das der Erfindung zugrundeliegende Prinzip beruht somit darauf, ein Geräusch zu erkennen, welches das bistabile Bimetallelement beim Umschnappen selbst erzeugt. Somit sind außer dem Bimetallelement keine weiteren mit dem Bimetallelement mechanisch zusammenwirkenden Bauteile erforderlich, die zunächst auf Umgebungstemperatur gebracht werden müssten, bevor der Temperatursensor schaltet. Das Bimetallelement kann sehr filigran ausgeführt werden, beispielsweise als dünne Metallscheibe eines Durchmessers von beispielsweise 0,5 Zoll. Bei Ansteigen der Umgebungstemperatur wird dieses filigrane Blechteil sehr schnell mit erwärmt und schnappt bei Überschreiten der Grenztemperatur um. Das so erzeugte Umschlaggeräusch, welches in etwa dem eines als Kinderspielzeug bekannten Knackfrosches entspricht, wird rein akustisch detektiert. Damit lassen sich Auslösezeiten von wenigen Sekunden realisieren.

Ein solcher Temperatursensor ist insbesondere als Brandmelder im Motorraum des Kraftfahrzeuges geeignet. Bei Kraftfahrzeugen mit Heckmotor, insbesondere Reise- und Linienbussen, ist die Erkennung eines Brandes im Motorraum durch eingeschränkte rückwärtige Sicht erschwert. Um eine rechtzeitige Evakuierung der Fahrzeuginsassen zu gewährleisten, wird daher eine Temperatursensoranordnung als Brandmelder im Motorraum des Kraftfahrzeuges benötigt, welche einen Motorbrand aufgrund des damit einhergehenden Temperaturanstiegs schnell und zuverlässig erkennt. Die erfindungsgemäße Sensoranordnung ist für diesen Einsatzzweck ideal.

Bei einer bevorzugten Ausführungsform ist das Bimetallelement als gewölbte Kreisscheibe ausgebildet. Im Fall einer gewölbten Kreisscheibe ruft deren abrupte Formänderung ein charakteristisches Umschlaggeräusch hervor, welches durch ein Umschnappen der gewölbten Kreisscheibe in der Hülse von einer vorzugsweise konkaven in eine vorzugsweise konvexe Form erzeugt wird. Die Bimetallscheibe kann z.B. in einer Hülse gehalten sein. Die Hülse kann dabei gleichzeitig als Resonator dienen. Außerdem kann die Hülse, beispielsweise als dünnwandiges Metallteil oder auch Kunststoffteil mit nur geringer thermischer Masse kostengünstig hergestellt werden. Die Hülse kann erforderlichenfalls umfangseitige Durchbrüche aufweisen, die eine Konvektion der umgebenden Luft und damit eine gute Wärmeleitung gewährleisten.

Das Bimetallelement besteht im Rahmen der vorliegenden Erfindung vorzugsweise aus zwei Schichten von Metallen und/oder Metalllegierungen mit unterschiedlichem Wärmeausdehnungskoeffizienten, bevorzugt aus Zink, Stahl, oder aus einer Legierung, die Eisen, Nickel, Mangan oder Chrom in verschiedenen Zusammensetzungen enthält.

Um eine sicheren axialen Halt der Kreisscheibe in der Hülse zu erreichen, weist die Hülse vorzugsweise einen hohlzylindrischen Mündungsabschnitt zur Aufnahme der Kreisscheibe auf, dessen Innendurchmesser sich in axialer Richtung verringert und eine radial verlaufende Schulter bildet, gegen die die Kreisscheibe gehalten ist.

In einer solchen Hülse kann die Kreisscheibe zweckmäßigerweise fixiert werden, indem ein Randbereich des hohlzylindrischen Mündungsabschnittes nach dem Einsetzen der Kreisscheibe nach innen hin abgekantet wird, so dass die Kreisscheibe gegen die Schulter gehalten wird, um deren exakte Position in der Temperatursensoranordnung festzulegen.

Vorzugsweise ist die Kreisscheibe gegenüber der Hülse mittels mindestens einer Dichtung, insbesondere mittels einem oder mehreren O-Ringen, gegen Eindringen von Feuchtigkeit geschützt ist. Das Eindringen von Feuchtigkeit aus der Umgebung in die Temperatursensoranordnung, insbesondere durch Spritz- oder Kondenswasser, könnte die empfindliche elektrische Detektorschaltung beschädigen. Daher verlängert die Dichtung die Lebensdauer der Temperatursensoranordnung und gewährleistet eine fehlerfreie Detektion des Umschlaggeräuschs der Kreisscheibe und eine damit verbundene Auslösung eines Alarms bei Überschreiten der Grenztemperatur. Anstelle eines O-Rings kann als Dichtung auch ein Rundschnurr- oder Flachdichtring verwendet werden. Vorzugsweise ist die Temperatursensoranordnung und insbesondere die Bimetallscheibe in ihrer Hülse entsprechen der Schutzklasse IP66, also staubdicht und gegen Eindringen von starkem Strahlwasser geschützt, ausgeführt.

Um das Mikrofon im Falle eines Brandes im Motorraum vor Hitzeschäden zu schützen, stehen in einer bevorzugten Ausführungsform Mikrofon und Bimetallelement über eine Hohlleitung, insbesondere ein flexibles Resonatorrohr, in akustischer Verbindung. Eine solche Hohlleitung kann zylindrisch, oval, polygonal, rechteckig oder quadratisch geformt sein. Sie gewährleistet eine Weiterleitung des Umschlaggeräuschs der Kreisscheibe zu einem entfernt angeordneten Mikrofon. So kann das Mikrofon vorzugsweise zusammen mit der Detektorschaltung in einem separaten, von dem Bimetallelement abgesetzten Gehäuse untergebracht und mit letzterem lediglich über die Hohlleitung akustisch leitend verbunden sein. Eine solche Bauform hat zudem den Vorteil, dass alle elektrischen Komponenten, also Mikrofon und Detektorschaltung, auf einer gemeinsamen Leiterplatte angeordnet und integriert sein können, was eine kostengünstige Serienproduktion ermöglicht.

Das Mikrofon kann vorzugsweise als Piezomikrofon ausgebildet sein. Ein solches hat eine besonders hohe Empfindlichkeit, ist mechanisch robust und zeichnet sich durch eine simple Bauweise aus. Daneben können jedoch auch andere Arten elektroakustischer Schallwandler wie etwa Elektretmikrofone, dynamische Mikrofone oder Kondensatormikrofone zum Einsatz kommen.

In einer vorteilhaften Ausgestaltung ist die Hohlleitung als Wellrohr, vorzugsweise Kunststoffwellrohr ausgebildet, in das die Hülse eingesteckt ist. Solche Kunststoffwellrohre sind auch als Marderschlauch bekannt und werden im KFZ-Bereich eingesetzt, um elektrische Leitungen vor Marderverbiss zu schützen.

Dabei kann zweckmäßiger Weise die Hülse außenseitig mit mindestens einer radial umlaufenden Erhebung versehen sein, welche die Hülse in axialem Formschluss mit einer Wellung des Wellrohrs hält. Dadurch wird das axiale Verrutschen der Hülse im Wellrohr verhindert.

Das Wellrohr kann beispielsweise aus einem Polymer ausgebildet sein, vorzugsweise aus Polyamid, Polyethylen, Polypropylen, Polytetrafluorethylen, Polyvinylchlorid oder Ethylen-Tetrafluorethylen. Die Verwendung eines Polymerschlauchs wirkt sich zusätzlich positiv auf das Gesamtgewicht der Temperatursensoranordnung aus.

Anstelle einer entfernten Anordnung und akustischen Anbindung des Mikrofons über einen Hohlleiter ist es bei einer alternativen Bauform jedoch auch möglich, das Mikrofon in unmittelbarer Nähe zum Bimetallelement, beispielsweise innerhalb der genannten Hülse hinter dem Bimetallelement, anzuordnen. Durch die räumliche Nähe von Bimetallelement und Mikrofon wird erreicht, dass die Sensoranordnung unempfindlicher gegen äußere Störgeräusche ist. Auch hier empfiehlt es sich, das Mikrofon in einem Wellrohr staubdicht und wassergeschützt hinter dem Bimetallelement anzuordnen und elektrische Verbindungsleitungen von dem Mikrofon zu der Detektoschaltung durch das Wellrohr zu führen. Letzteres dient dabei dann nicht als akustischer Hohlleiter, sondern zum Schutz der empfindlichen elektrischen Leitungen vor mechanischer Beschädigung oder Korrosion.

Um das charakteristische Umschlaggeräusch von störenden Umgebungsgeräuschen zu separieren und somit einen Fehlalarm zu verhindern, weist die Detektorschaltung vorzugweise mindestens ein analoges oder digitales Filter auf, das insbesondere zur spektralen und/oder zeitlichen Filterung ausgebildet ist. Dadurch lassen sich z.B. Anteile eines Eingangssignals in Abhängigkeit von deren Frequenz oder zeitlichem Verlauf entweder weiterleiten oder dämpfen. Durch die Verwendung eines Filters ist die Gefahr eines Fehlalarms stark reduziert. Hierbei ist auch eine Kombination mehrerer Filter, sowohl digitaler als auch analoger Filter, im Rahmen der vorliegenden Erfindung mit umfasst. So kann durch eine stufenweise Filterung des Eingangssignals, z.B. mittels eines analogen Bandpassfilters und einer nachgeschalteten digitalen Filterung im digitalen Bereich eine weitere Verbesserung der Detektionsgenauigkeit erreicht werden.

Bei einer Weiterbildung der Erfindung kann ein künstliches neuronales Netz zur Identifikation des charakteristischen Umschlaggeräuschs eingesetzt werden. Ein solches künstliches neuronales Netz wird mit einer programmierbaren Prozessoranordnung und entsprechender Programmstruktur als Teil der Detektorschaltung implementiert und ermöglicht nach entsprechendem Training in einer Lernphase eine Erkennung des charakteristischen Umschlaggeräuschs gegenüber Störgeräuschen.

In einer weiteren bevorzugten Ausführungsform weist die erfindungsgemäße Temperatursensoranordnung einen Hochfrequenztransmitter aus, der ausgebildet ist, bei Überschreiten der Grenztemperatur eine Alarmmeldung drahtlos an einen Empfänger zu übertragen. Bei Kraftfahrzeugen mit Heckmotor ist der Einbau einer Temperatursensoranordnung mit durch Verkabelung nachgeschaltetem Anzeigeelement im Armaturenbrett des Kraftfahrzeuges umständlich und somit mit einem hohen Arbeitsaufwand mit entsprechend hohen Kosten verbunden. Eine kabellose Übertragung der Alarmmeldung von der Temperatursensoranordnung im Motorraum zum Anzeigeelement im Armaturenbrett des Kraftfahrzeuges vereinfacht somit den Einbau der Temperatursensoranordnung, insbesondere im Fall einer Nachrüstung.

Die Erfindung betrifft weiterhin ein Verfahren zur Überwachung einer Umgebungstemperatur, insbesondere zur Erkennung eines Brandes im Motorraum eines Kraftfahrzeuges, bei dem zur Temperaturüberwachung ein bistabiles Bimetallelement eingesetzt wird, welches aufgrund seines Wärmeausdehnungsverhaltens bei Überschreiten einer vorgegebenen Grenztemperatur eine abrupte Formänderung erfährt. Erfindungsgemäß ist hierbei vorgesehen, dass mit einem Mikrofon ein bei abrupter Formänderung des Bimetallelements auftretendes charakteristisches Umschlaggeräusch detektiert wird, um ein Überschreiten der Grenztemperatur festzustellen.

Bei einer vorteilhaften Ausführungsform des erfindungsgemäßen Verfahrens wird aufgrund eines erkannten Umschlaggeräusches eine Alarmmeldung erzeugt und vorzugsweise drahtlos an einen Empfänger übertragen.

Weitere Merkmale, Eigenschaften und Vorteile der vorliegenden Erfindung ergeben sich aus der nachfolgenden Beschreibung von Ausführungsbeispielen anhand der Zeichnung. Es zeigt:
- Figur 1: ein Ausführungsbeispiel einer erfindungsgemäßen Temperatursensoranordnung;
- Figur 2: einen Teilschnitt der Temperatursensoranordnung aus Figur 1;
- Figur 3: einen Längsschnitt der Temperatursensoranordnung aus Figur 1;
- Figur 4: ein Blockschaltbild einer Detektorschaltung, die bei einer erfindungsgemäßen Sensoranordnung zum Einsatz kommt.

In allen Figuren sind schematische Darstellungen gezeigt. Gleiche Bezugszeichen bezeichnen gleiche oder entsprechende Elemente.

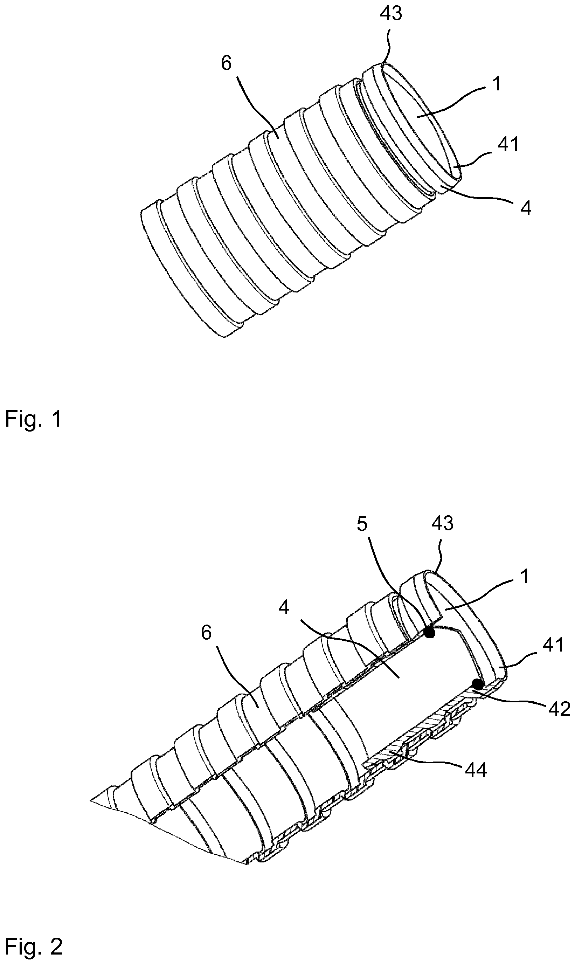

Figur 1 zeigt ein Ausführungsbeispiel einer erfindungsgemäßen Temperatursensoranordnung zur Detektion eines Brandes im Motorraum eines Kraftfahrzeuges.

Die Temperatursensoranordnung weist ein bistabiles Bimetallelement 1 auf, welches als gewölbte Kreisscheibe ausgebildet ist und von einer Hülse 4 gehalten wird. Die Hülse 4 weist zur Aufnahme des als gewölbte Kreisscheibe ausgebildeten Bimetallelements 1 einen hohlzylindrischen Mündungsabschnitt 41 auf, dessen Innendurchmesser sich in axialer Richtung verringert und eine radial verlaufende Schulter 42 bildet. Die Kreisscheibe wird gegen diese radial verlaufende Schulter 42 gehalten, wodurch diese gegen ein axiales Verrutschen in der Hülse 4 gesichert wird.

Der hohlzylindrische Mündungsabschnitt 41 ist nach innen abgekantet (in der Figur nicht zu erkennen), wodurch ein radial verlaufender Randbereich 43 geformt ist, welcher das als gewölbte Kreisscheibe ausgebildete Bimetallelement 1 derart umschließt, dass dieses zusätzlich gegen ein seitliches Verrutschen gesichert ist. Des Weiteren wird die Kreisscheibe zwar bezüglich der Hülse in axialer Richtung durch den abgekanteten Mündungsabschnitt 41 gegen die Schulter 42 gehalten, hat jedoch in radialer Richtung genügend Bewegungsfreiheit, damit sie beim Überschreiten einer vorgegebenen Grenztemperatur durch eine abrupte Formänderung umschnappen kann.

Die Hülse 4 ist mit der dem Mündungsabschnitt 41 abgewandten Seite der Hülse 4 in eine Hohlleitung 6 eingesteckt. Die Hohlleitung 6 ist im dargestellten Ausführungsbeispiel als Wellrohr ausgebildet.

Das Bimetallelement 1 im Ausführungsbeispiel besteht aus zwei unterschiedlichen Stahllegierungen, die sich vor allem im Mangananteil unterscheiden. Der Zusatz von Mangan als Legierungskomponente hat einen besonders großen Einfluss auf den AusdehnungsKoeffizienten der betreffenden Stahl-Legierung.

In Figur 2 ist ein Teilschnitt eines Ausführungsbeispiels einer Temperatursensoranordnung als Detailansicht dargestellt. Folgende Elemente sind gezeigt:
Das als gewölbte Kreisscheibe ausgebildete Bimetallelement 1, die Hülse 4, den hohlzylindrischen Mündungsabschnitt 41, die radial verlaufende Schulter 42, den das Bimetallelement 1 umschließenden Randbereich 43 sowie die als Wellrohr ausgebildete Hohlleitung 6.

Zusätzlich ist in Figur 2 dargestellt, dass im vorliegenden Ausführungsbeispiel der erfindungsgemäßen Temperatursensoranordnung die Hülse 4 außenseitig mit zwei radial umlaufenden Erhebungen 44 versehen ist. Diese halten die Hülse 6 in axialem Formschluss mit zwei Wellungen des Wellrohrs und sichern die Hülse 6 gegen ein axiales Verrutschen im Wellrohr 6.

Um das Eindringen von Feuchtigkeit in die Temperatursensoranordnung zu verhindern, insbesondere von Kondens- oder Spritzwasser, ist das als Kreisscheibe ausgebildete Bimetallelement 1 gegenüber der Hülse 4 mittels einer Dichtung 5 abgedichtet. Diese Dichtung 5 ist im vorliegenden Ausführungsbeispiel als O-Ring ausgebildet. Die Dichtung 5 verlängert die Lebenszeit der Temperatursensoranordnung und garantiert eine fehlerfreie Detektion des Umschlaggeräuschs des Bimetallelements 1 und die damit verbundene Weiterleitung der Alarmmeldung an den Kraftfahrzeugführer. Ein solcher O-Ring kann zweckmäßig zwischen Bimetallscheibe 1 und innenseitiger Schulter bzw. Stufe 42 eingesetzt werden.

Möglich und im Rahmen der vorliegenden Erfindung mit umfasst ist auch eine Ausführungsform, bei der zur Abdichtung der Bimetallscheibe 1 zwei O-Ringe vorgesehen sind. Diese zwei O-Ringe sind im abgekanteten hohlzylindrischen Mündungsabschnitt der Hülse vor und hinter der Bimetallscheibe 1 angeordnet und halten diese gegen die radial verlaufende Schulter der Hülse. Aufgrund der Elastizität der O-Ringe bleibt die Bewegungsfreiheit der Bimetallscheibe 1 im Mündungsabschnitt erhalten, so dass ein Umschnappen bei Erreichen der Grenztemperatur nicht behindert wird.

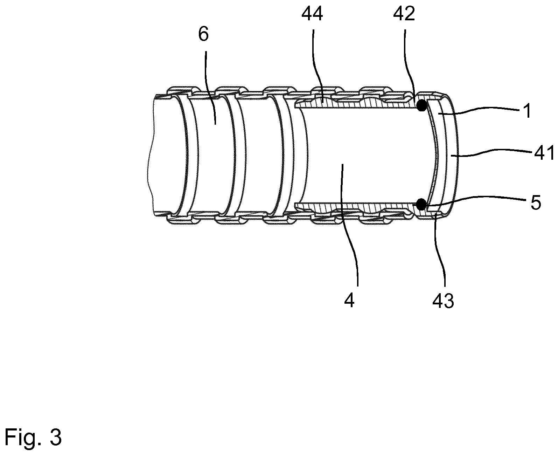

Figur 3 zeigt einen Längsschnitt durch eine erfindungsgemäße Temperatursensoranordnung. Folgende Elemente sind dargestellt:
Das als gewölbte Kreisscheibe ausgebildete Bimetallelement 1, die Hülse 4, den hohlzylindrischen Mündungsabschnitt 41, die radial verlaufende Schulter 42, den das Bimetallelement 1 umschließenden Randbereich 43, die als O-Ring ausgebildete Dichtung 5, zwei radial umlaufenden Erhebungen 44 der Hülse 4 sowie die als Wellrohr ausgebildete Hohlleitung 6.

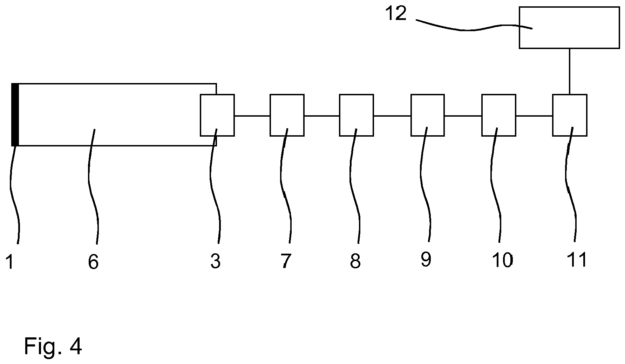

Figur 4 zeigt schematisch ein Blockdiagramm einer Detektorschaltung für eine Temperatursensoranordnung. Wie zuvor erwähnt, ist das Bimetallelement 1 an einer Hohlleitung 6 angeordnet. Auf dem gegenüberliegenden Ende der Hohlleitung 6 ist ein Mikrofon 3 angeordnet. Über diese Hohlleitung 6, welche insbesondere als flexibles Resonatorrohr, vorzugsweise als Wellrohr ausgebildet ist, stehen das Mikrofon 3 und das Bimetallelement 1 in akustischer Verbindung. Die Länge der Hohlleitung kann in Abhängigkeit vom Kraftfahrzeugtyp frei gewählt werden und dient dazu, das Mikrofon im Falle eines Brandes im Motorraum vor Hitzeschäden zu schützen. Somit gewährleistet die Hohlleitung 6 eine akustische Weiterleitung des Umschlaggeräuschs des als Kreisscheibe ausgebildeten Bimetallelements 1 zum Mikrofon. Dort wird das Umschlaggeräusch in ein elektrisches Signal umgewandelt und als elektrisches Signal an die Detektorschaltung weitergeleitet. Die Detektorschaltung hat die Aufgabe, das charakteristische Umschlaggeräusch zu erkennen und sicher von anderweitigen Umgebungsgeräuschen zu unterscheiden. Wird ein Umschlaggeräusch, als das charakteristische von der Bimetallscheibe erzeugte Knacken, erkannt, so erzeugt die Detektorschaltung ein Alarmsignal, welches dann z.B. dem Kraftfahrzeugführer am Armaturenbrett in Form eines visuellen und/oder akustischen Warnsignals angezeigt bzw. ausgegeben werden kann.

Das Mikrofon ist im dargestellten Ausführungsbeispiel als Piezomikrofon ausgebildet. Es dient als elektrischer Schallwandler, der das Umschlaggeräusch des Bimetallelementes 1 als Schallwechseldruckschwingungen in entsprechende elektrische Spannungsänderungen als Mikrofonsignal umwandelt.

Dem Mikrofon 3 ist ein Verstärker 7 nachgeschaltet, welcher zur Verstärkung und Weitergabe des vom Mikrofon 3 eingehenden elektrischen Signals dient.

Ein Analog-Digital-Wandler (ADC) 8 wandelt das elektrische Signal in ein Digitalsignal, welches dann in einem digitalen Filter 9, beispielsweise mittels Fast Fourier Transformation im Frequenz und/oder Zeitbereich gefiltert wird, um nicht interessierende Störgeräusche der Umgebung zu eliminieren. Dadurch werden Fehlalarme vermieden.

Anschließend wird das vom Filter 9 vorverarbeitete Digitalsignal von einem Komparator 10 mit einem Schwellenwert verglichen. Liegt das Eingangssignal über dem Schwellenwert, bedeutet dies, dass ein charakteristisches Knackgeräusch aufgetreten war, also die Grenztemperatur am Temperatursensor überschritten wurde. Ein entsprechendes Binärsignal wird dann an einen nachgeschalteten Mikrocontroller 11 weitergeleitet. Dieser verarbeitet das Binärsignal und erzeugt eine Alarmmeldung. Die Funktion des Komparators 10 kann auch in den Mikrocontroller 11 integriert sein.

Im dargestellten Ausführungsbeispiel weist die Detektorschaltung einen Hochfrequenztransmitter 12 auf, der die von dem Mikrocontroller 11 erzeugte Alarmmeldung drahtlos an einen Empfänger überträgt. Dies hat den Vorteil, dass bei Kraftfahrzeugen mit Heckmotor beim Einbau der Temperatursensoranordnung auf eine komplizierte Verkabelung zwischen der Temperatursensoranordnung und dem nachgeschalteten Anzeigeelement im Armaturenbrett des Kraftfahrzeuges verzichtet werden kann. Somit kann insbesondere im Falle einer Nachrüstung ein hoher Arbeitsaufwand mit entsprechend hohen Arbeitskosten vermieden werden.

Alternativ zu einem ADC und digitalen Filter kann die Filterung natürlich auch im analogen Bereich erfolgen. Der Komparator 10 vergleicht dann ein gefiltertes Analogsignal mit einem vorgegebenen Signalwert und erzeugt bei Überschreiten des Schwellwertes ein entsprechendes Binärsignal.

Bei einer Weiterbildung kann der Mikroprozessor mit einer Programmstruktur in Form eines künstlichen neuronalen Netzes programmiert sein. Solche künstlichen neuronalen Netze eignen sich als Klassifikatoren in der Mustererkennung und können mit geeigneten Eingangssignalen trainiert werden, um bestimmte Typen von Eingangssignalen bzw. Signalmuster zu erkennen. Ein solches neuronales Netz kann daher im Rahmen der Erfindung eingesetzt werden, um innerhalb einer störgeräuschbehafteten Umgebung das Auftreten des charakteristischen Umschlaggeräuschs der Bimetallscheibe zu erkennen.

Ein solches künstliches neuronales Netz umfasst modellierte Neuronen (z.B. sogenannte McCulloch-Pitts-Neuronen) in Form von Eingangsneuronen, Ausgangsneuronen und mit Gewichten versehene Verbindungen zwischen den Neuronen. An die Eingangsneuronen wird ein Digitalsignal angelegt, das einem vom Mikrofon empfangenen Geräuschsignal entspricht. Nach entsprechendem Training mit verschiedenen mehr oder weniger störgeräuschbehafteten Knackgeräuschen der Bimetallscheibe, kann das neuronale Netz an den Ausgangsneuronen ein Erkennungssignal erzeugen, welches das Auftreten des charakteristischen Knackens signalisiert. In der Trainingsphase werden dabei die Gewichtungen von Neuron zu Neuron und die Schwellenwerte der einzelnen Neuronen solange angepasst bis die gewünschten Signaltypen zuverlässig erkannt werden. Dies entspricht einer modellierten Nachbildung der Lernvorgänge im menschlichen Gehirn, weswegen die Programmtechnik der künstlichen neuronalen Netze dem Informatikgebiet der künstlichen Intelligenz zugerechnet wird.

## Patentansprüche

1. Temperatursensoranordnung, insbesondere als Brandmelder im Motorraum eines Kraftfahrzeuges, mit einem bistabilen, vorzugsweise scheibenförmigen Bimetallelement (1), welches aufgrund seines Wärmeausdehnungsverhaltens bei Überschreiten einer vorgegebenen Grenztemperatur eine abrupte Formänderung erfährt, und mit einer mit dem Bimetallelement (1) zusammenwirkenden Detektorschaltung (7, 8, 9, 10, 11),
**dadurch gekennzeichnet, dass**
die Temperatursensoranordnung ein Mikrofon (3) aufweist, und die Detektorschaltung (7, 8, 9, 10, 11) zur Detektion eines durch das Bimetallelement (1) aufgrund seiner abrupten Formänderung erzeugten charakteristischen Umschlaggeräuschs ausgebildet ist.

2. Temperatursensoranordnung nach Anspruch 1, bei der das Bimetallelement (1) als gewölbte Kreisscheibe ausgebildet ist, die vorzugsweise in einer Hülse (4) gehalten ist.

3. Temperatursensoranordnung nach Anspruch 2, bei der die Hülse (4) einen hohlzylindrischen Mündungsabschnitt (41) zur Aufnahme der Kreisscheibe aufweist, dessen Innendurchmesser sich in axialer Richtung verringert und eine radial verlaufende Schulter (42) bildet, gegen die die Kreisscheibe gehalten ist.

4. Temperatursensoranordnung nach Anspruch 3, bei der ein Randbereich (43) des hohlzylindrischen Mündungsabschnittes (41) nach innen abgekantet ist, um die Kreisscheibe gegen die Schulter (42) zu halten.

5. Temperatursensoranordnung nach den Ansprüchen 2 bis 4, bei der die Kreisscheibe gegenüber der Hülse (4) mittels mindestens einer Dichtung (5), insbesondere mittels einem oder mehrerer O-Ringe, gegen Eindringen von Feuchtigkeit geschützt ist.

6. Temperatursensoranordnung nach einem der vorangegangenen Ansprüche, bei der Mikrofon (3) und Bimetallelement (1) über eine Hohlleitung (6), insbesondere ein flexibles Resonatorrohr, in akustischer Verbindung stehen.

7. Temperatursensoranordnung nach Anspruch 6, bei der die Hohlleitung (6) als Wellrohr ausgebildet ist, in das die Hülse (4) eingesteckt ist, und bei der vorzugsweise die Hülse (4) außenseitig mit mindestens einer radial umlaufenden Erhebung (44) versehen ist, welche die Hülse (4) in axialem Formschluss mit einer Wellung des Wellrohrs hält.

8. Temperatursensoranordnung nach einem der vorangegangenen Ansprüche, bei der die Detektorschaltung mindestens ein analoges oder digitales Filter (9) aufweist, das zur Filterung des charakteristischen Geräuschs gegenüber Störgeräuschen ausgebildet ist, insbesondere zur spektralen und/oder zeitlichen Filterung.

9. Temperatursensoranordnung nach einem der vorangegangenen Ansprüche, bei der die Detektorschaltung eine Prozessorstruktur aufweist, die ein künstliches neuronales Netz zur Identifikation des charakteristischen Umschlaggeräuschs verwendet.

10. Temperatursensoranordnung nach einem der vorangegangen Ansprüche, mit einem Hochfrequenztransmitter (12), der ausgebildet ist, bei Überschreiten der Grenztemperatur eine Alarmmeldung drahtlos an einen Empfänger zu übertragen.

11. Verfahren zur Überwachung einer Umgebungstemperatur, insbesondere zur Erkennung eines Brandes im Motorraum eines Kraftfahrzeuges, bei dem zur Temperaturüberwachung ein bistabiles Bimetallelement (1) eingesetzt wird, welches aufgrund seines Wärmeausdehnungsverhaltens bei Überschreiten einer vorgegebenen Grenztemperatur eine abrupte Formänderung erfährt,
**dadurch gekennzeichnet, dass**
mit einem Mikrofon (3) ein bei abrupter Formänderung des Bimetallelements (1) auftretendes charakteristisches Umschlaggeräusch detektiert wird, um ein Überschreiten der Grenztemperatur festzustellen.

12. Verfahren nach Anspruch 11, bei dem aufgrund eines erkannten Umschlaggeräusches eine Alarmmeldung erzeugt und vorzugsweise drahtlos an einen Empfänger übertragen wird.
